# EUROPEAN PATENT APPLICATION

(11) **EP 4 827 069 A1**
(43) Date of publication of application: **21.10.2026**
(21) Application number: 26168112.6
(22) Date of filing: 26.03.2026
(51) Int. Cl.: H04L 69/08, H04B 3/54, H04L 69/18

(54) **APPARATUS AND METHOD FOR MULTI-PROTOCOL COMMUNICATION**

(30) Priority: 17.04.2025 IN 202511037370
(71) Applicant: Vertiv Corporation, Westerville, OH 43082 (US)
(72) Inventor: PANDIT, SANKET, Westerville, 43082 (US); SHARMA, PUTLI, Westerville, 43082 (US)
(74) Representative: Cousens, Nico

(57) **Abstract**

The present application discloses a multi-protocol communication apparatus (100, 200) and method for enabling bidirectional communication among heterogeneous communication protocols using a single integrated device. The apparatus includes a plurality of communication interfaces (102, 230, 212, 244, 238, 220, 224, 228), each configured to support a distinct communication protocol, and a control unit operatively coupled to the communication interfaces. The control unit is configured to receive data from a first communication interface, identify the protocol of the received data, convert the data into a data format compatible with a second communication protocol, and transmit the converted data to a second communication interface. The apparatus supports protocols including power-line communication (PLC), Controller Area Network (CAN), RS-485, Ethernet, USB, and Bluetooth, and is suitable for datacenter, industrial automation, and IoT applications.

## Description

### FIELD OF THE DISCLOSURE

The present disclosure relates generally to communication systems and interfaces. More particularly, the disclosure relates to apparatuses and methods for enabling communication between devices operating on different communication protocols, including wired and wireless communication standards.

### BACKGROUND OF THE DISCLOSURE

Background description includes information that may be useful in understanding the present disclosure.

In modern digital and industrial environments, seamless communication between devices operating on different protocols is essential. Communication adaptors play a crucial role in enabling interoperability between such devices. However, conventional adaptors are often designed to support only a limited set of communication protocols, thereby restricting their applicability. For example, when a user needs to connect multiple devices, such as a newly acquired printer, an older scanner, and a modern smartphone, each using distinct communication protocols, compatibility challenges may arise. In such cases, the user is forced to either replace existing devices with compatible alternatives or procure multiple adaptors, which can result in increased costs and a cluttered workspace.

In large-scale deployments, including datacenters, industrial automation systems, and power distribution systems, multiple communication protocols are commonly used for interfacing different components such as converters, rectifiers, user interfaces, inverters, and Internet of Things (loT) devices. Existing solutions in such environments typically require multiple dedicated communication boards, each supporting a specific protocol. This approach leads to increased hardware complexity, design inefficiencies, and higher maintenance costs. Moreover, the inability of a single communication interface to support multiple protocols limits scalability and flexibility in these deployments.

The rapid evolution of communication technologies has further exacerbated these challenges. New communication protocols are frequently introduced, which can render previously compatible communication adaptors obsolete. As a result, users and enterprises may be compelled to frequently upgrade or replace adaptors, leading to additional costs and operational disruptions. The continued reliance on single-protocol adaptors also contributes to excessive wiring, increased power consumption, and logistical inefficiencies, particularly in environments that require high-speed and reliable data exchange.

Some existing solutions attempt to mitigate these issues by integrating multiple protocol interfaces within a single adaptor. However, such solutions often lack a unified control mechanism capable of facilitating seamless protocol conversion and bidirectional data exchange. Additionally, existing multi-protocol adaptors may experience latency issues, inefficient power utilization, and limited scalability, making them unsuitable for dynamic and high-performance communication networks.

Thus, there is a need for improved approaches to multi-protocol communication that support multiple distinct communication protocols within a single device, enable seamless protocol conversion and bidirectional data exchange, optimize data transfer between devices, and reduce hardware and operational complexities.

### SUMMARY OF THE DISCLOSURE

This summary is provided to introduce concepts related to communication systems and interfaces. More particularly, the disclosure relates to apparatuses and methods for enabling communication between devices operating on different communication protocols, including wired and wireless communication standards. This summary is not intended to identify key features or essential features of the claimed subject matter, nor is it intended to be used to limit the scope of the claimed subject matter.

In an aspect of the present disclosure, a multi-protocol communication apparatus is described. The apparatus includes a plurality of communication interfaces and a control unit. Each communication interface of the plurality of communication interfaces is configured to communicate using a respective and distinct communication protocol. The control unit is operatively coupled to the plurality of communication interfaces, and configured to: (i) perform protocol conversion between at least two of the distinct communication protocols, and (ii) enable bidirectional data transfer among the plurality of communication interfaces, whereby the apparatus enables communication among heterogeneous communication protocols using a single apparatus.

In at least one embodiment, the control unit is further configured to: (a) receive data from a first communication interface operating in accordance with a first communication protocol, (b) identify the first communication protocol associated with the received data, (c) convert the received data into a data format compatible with a second communication protocol different from the first communication protocol, and (d) transmit the converted data to a second communication interface operating in accordance with the second communication protocol.

In at least one embodiment, the plurality of communication interfaces includes at least two interfaces selected from the group consisting of a power-line communication (PLC) interface, a Controller Area Network (CAN) interface, an RS-485 interface, an Ethernet interface, a Universal Serial Bus (USB) interface, a Bluetooth interface, and a Joint Test Action Group (JTAG) interface.

In at least one embodiment, the control unit performs protocol conversion using protocol mapping parameters.

In at least one embodiment, the apparatus includes a storage unit operatively coupled to the control unit. The storage unit stores at least one of predefined protocol mapping parameters, dynamically updated protocol mapping parameters, and temporarily buffered data to accommodate communication interfaces operating at different data rates.

In at least one embodiment, the control unit is configured to dynamically allocate communication bandwidth among the plurality of communication interfaces based on real-time data traffic conditions.

In at least one embodiment, the real-time data traffic conditions include at least one of buffer occupancy, latency, throughput, error rate, or interface priority.

In at least one embodiment, the apparatus further includes a power regulation unit configured to supply regulated power to the control unit and the plurality of communication interfaces. The power regulation unit is configured to receive power from both a battery power source and a power-line communication input connector. Further, power from the battery power source and the power-line communication input connector is combined using a diode-OR configuration.

In at least one embodiment, the power regulation unit includes (i) an input filter configured to suppress electrical noise, (ii) an isolated flyback transformer configured to generate one or more isolated DC voltages, and (iii) at least one low-dropout voltage regulator configured to provide regulated supply voltages.

In at least one embodiment, the apparatus further includes a battery backup unit configured to provide power to the apparatus during interruption or fluctuation of an external power source.

In at least one embodiment, a power-line communication (PLC) interface of the plurality of communication interfaces is configured to receive communication signals and electrical power through a shared connector. The shared connector provides differential power-line communication signals and line power on common conductors.

In at least one embodiment, a power-line communication (PLC) interface includes a PLC modem configured to modulate and demodulate communication signals transmitted over a power line.

In at least one embodiment, the PLC interface includes a buffer line driver configured to condition differential power-line communication signals prior to processing by the PLC modem.

In at least one embodiment, an Ethernet interface of the plurality of communication interfaces includes at least one of: (i) a 10/100 Mbps Ethernet physical layer interface, or (ii) a USB-to-Ethernet bridge configured to support Gigabit Ethernet communication.

In at least one embodiment, an RS-485 interface of the plurality of communication interfaces is configured to support Modbus or other industrial serial communication protocols.

In at least one embodiment, a Controller Area Network (CAN) interface of the plurality of communication interfaces includes an isolated CAN transceiver configured for differential signaling.

In at least one embodiment, a Bluetooth interface of the plurality of communication interfaces is configured to provide encrypted wireless communication with an external device.

In at least one embodiment, the apparatus includes a real-time clock configured to generate time-stamped logs of communication events.

In at least one embodiment, the control unit includes a microcontroller configured to simultaneously manage multiple communication protocols.

In at least one embodiment, any of the plurality of communication interfaces is selectively configurable as a first communication interface or a second communication interface based on operational conditions.

In at least one embodiment, the control unit is configured to temporarily store received data prior to protocol conversion to accommodate communication interfaces operating at different data rates.

In another aspect of the present disclosure, a method for multi-protocol communication is described. The method includes the step of receiving, through a first communication interface of a multi-protocol communication apparatus, a data formatted in accordance with a first communication protocol. The method further includes the step of identifying, by a control unit of the apparatus, the first communication protocol of the received data. The method includes the step of converting, by the control unit, the received data into a data format compatible with a second communication protocol different from the first communication protocol. Finally, the method includes the step of transmitting, to a second communication interface of the apparatus, the converted data.

In at least one embodiment, the receiving and transmitting steps are performed bidirectionally between any two communication interfaces of the apparatus.

In at least one embodiment, the method further includes the steps of: (i) retrieving protocol mapping parameters from a storage unit to perform the converting step, and (ii) dynamically updating the protocol mapping parameters based on operational conditions.

In at least one embodiment, the method further includes the step of dynamically allocating communication bandwidth among multiple communication interfaces based on real-time data traffic conditions. The step of dynamically allocating communication bandwidth includes the sub-step of prioritizing communication over one interface while buffering data associated with another interface.

In at least one embodiment, the method further includes the steps of (i) temporarily storing the received data in storage prior to conversion, and (ii) generating a time-stamp associated with at least one of the received data or the transmitted data using a real-time clock.

In at least one embodiment, the first or second communication protocol is selected from the group consisting of power-line communication, Controller Area Network, RS-485, Ethernet, Universal Serial Bus, and Bluetooth.

In at least one embodiment, the step of receiving the data includes the sub-step of receiving a power-line communication signal over a conductor that simultaneously supplies electrical power to the apparatus.

In at least one embodiment, the step of identifying the first communication protocol includes the sub-step of analyzing at least one of data framing, header structure, interface-level indicators, or protocol-specific timing characteristics.

Various objects, features, aspects, and advantages of the inventive subject matter will become more apparent from the following detailed description of preferred embodiments, along with the accompanying drawing figures in which like numerals represent like components.

### BRIEF DESCRIPTION OF DRAWINGS:

The illustrated embodiments of the subject matter will be understood by reference to the drawings, wherein like parts are designated by like numerals throughout. The following description is intended only by way of example and simply illustrates certain selected embodiments of devices, apparatus, systems, and methods that are consistent with the subject matter as claimed herein, wherein:
FIG. 1 illustrates a block diagram of a multi-protocol communication apparatus, in accordance with an embodiment of the present disclosure;
FIG. 2 illustrates a multi-protocol signal diagram of a multi-protocol communication apparatus, in accordance with an embodiment of the present disclosure;
FIG. 3 illustrates a signal process flowchart in a multi-protocol communication apparatus, in accordance with an embodiment of the present disclosure; and
FIG. 4 illustrates a flowchart of a method for multi-protocol communication in a multi-protocol communication apparatus, in accordance with an embodiment of the present disclosure.

The figures depict embodiments of the present subject matter for the purposes of illustration only. A person skilled in the art will easily recognize fromthe following description that alternative embodiments of the structures and methods illustrated herein may be employed without departing from the principles of the disclosure described herein.

### DETAILED DESCRIPTION OF THE DISCLOSURE:

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications and alternatives falling within the scope of the present invention as defined by the appended claims.

While the embodiments of the disclosure are subject to various modifications and alternative forms, specific embodiments thereof have been shown by way of example in the figures and will be described below. It should be understood, however, that it is not intended to limit the disclosure to the particular forms disclosed, but, on the contrary, the disclosure is to cover all modifications and alternatives falling within the scope of the disclosure.

The terms "comprises", "comprising", or any other variations thereof used in the disclosure, are intended to cover a non-exclusive inclusion, such that a device, apparatus, system, or assembly that comprises a list of components does not include only those components but may include other components not expressly listed or inherent to such system, or apparatus, or assembly, or device. In other words, one or more elements in a system or apparatus or device proceeded by "comprises... a" does not, without more constraints, preclude the existence of other elements or additional elements in the system or apparatus or device.

In accordance with one or more embodiments, the present disclosure relates to a multi-protocol communication apparatus and a method for multi-protocol communication, configured to enable data exchange between devices operating according to different communication protocols. The apparatus is structured to address limitations associated with conventional communication adaptors that typically facilitate communication using only a limited set of communication protocols, thereby restricting interoperability among heterogeneous devices. As described herein, the multi-protocol communication apparatus provides a single apparatus capable of performing bidirectional data transfer and protocol conversion between at least two of the distinct communication protocols, thereby reducing the need for multiple dedicated adaptors and enabling compatibility across diverse communication standards. The multi-protocol communication apparatus may also be referred to as a multi-protocol adapter.

In at least one embodiment, the multi-protocol communication apparatus includes a plurality of communication interfaces, wherein each communication interface is configured to facilitate communication using a respective and distinct communication protocol. The plurality of communication interfaces may include, without limitation, a power-line communication (PLC) interface, a Controller Area Network (CAN) interface, an RS-485 interface, an Ethernet interface, a Universal Serial Bus (USB) interface, a Bluetooth interface, and a Joint Test Action Group (JTAG) interface. A control unit is operatively coupled to the plurality of communication interfaces and is configured to perform protocol conversion between at least two of the distinct communication protocols and to enable bidirectional data transfer among the plurality of communication interfaces. In some embodiments, the control unit performs protocol conversion using protocol mapping parameters, which may be predefined or dynamically determined during operation to optimize protocol conversion.

In one or more embodiments, the multi-protocol communication apparatus further includes a power regulation unit configured to supply regulated power to the control unit and the plurality of communication interfaces. The power regulation unit may include an input filter configured to suppress electrical noise, an isolated flyback transformer configured to generate one or more isolated DC voltages, and at least one low-dropout voltage regulator configured to provide regulated supply voltages. In at least one embodiment, the power regulation unit is configured to receive power from a plurality of power sources including a battery power source and a power-line communication (PLC) input, and to combine power from the plurality of power sources using a diode-based power combining configuration. Additionally, a battery backup unit may be provided to supply power to the apparatus during interruption or fluctuation of an external power source, thereby supporting continuous operation in applications such as datacenter panels, industrial automation systems, and Internet of Things (loT) environments. The apparatus may further include a storage unit operatively coupled to the control unit, wherein the storage unit includes at least one of electrically erasable programmable read-only memory (EEPROM), flash memory, or a combination thereof, and stores protocol mapping parameters used during protocol conversion.

In at least one embodiment, the control unit is further configured to dynamically allocate communication bandwidth among the plurality of communication interfaces based on real-time data traffic conditions. Such real-time data traffic conditions may include, for example, buffer occupancy, latency, throughput, error rate, or interface priority. Dynamic allocation of communication bandwidth improves overall data transmission efficiency and reduces communication bottlenecks when multiple communication interfaces operate concurrently. In some embodiments, the multi-protocol communication apparatus further includes a real-time clock, which is configured to generate time-stamped logs of communication events, thereby facilitating data tracking, diagnostics, and synchronization within networked communication environments.

The present disclosure further provides a method for multi-protocol communication. In one or more embodiments, the method includes receiving, through a first communication interface of the multi-protocol communication apparatus, a data formatted according to a first communication protocol, identifying, by the control unit, the first communication protocol of the received data, converting the received data into a data format compatible with a second communication protocol different from the first communication protocol, and transmitting the converted data to a second communication interface according to the second communication protocol. In at least one embodiment, the first communication interface includes a power-line communication (PLC) interface configured to receive communication signals over a conductor that also supplies electrical power to the apparatus. The method enables bidirectional communication between devices operating on different communication protocols without requiring modification of the devices' existing communication frameworks. In some embodiments, the method further includes storing protocol mapping parameters in storage, dynamically updating such parameters, temporarily storing received data prior to conversion, and dynamically allocating communication bandwidth based on real-time data traffic conditions.

For better understanding, one or more embodiments of the present disclosure shall be described with respect to the earlier-mentioned drawings.

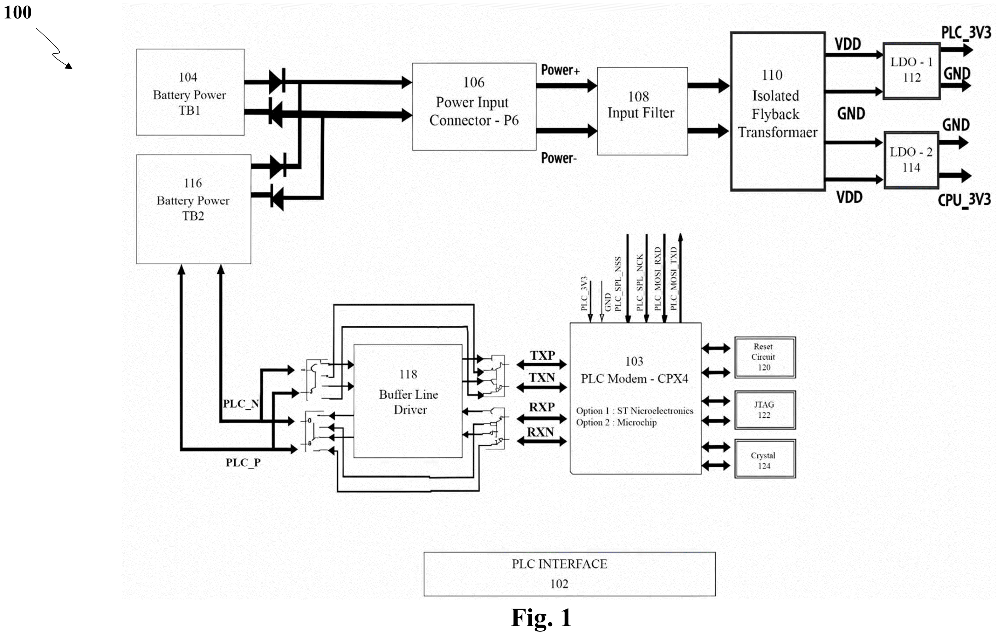

**FIG. 1** illustrates a block diagram of a multi-protocol communication apparatus (100), in accordance with an embodiment of the present disclosure. As illustrated, the apparatus (100) facilitates bidirectional data transfer between external devices operating according to different communication protocols by utilizing a control unit, a plurality of communication interfaces, and a power regulation unit. The components of the apparatus are arranged to enable protocol conversion between at least two of the distinct communication protocols, efficient power management, and reliable communication across heterogeneous interfaces, whereby the apparatus enables communication using a single apparatus.

In at least one embodiment, the plurality of communication interfaces includes interfaces configured to support PLC, CAN, RS-485, Ethernet, USB, Bluetooth, and JTAG protocols. Table 1 below illustrates representative hardware components corresponding to these protocols, including a PLC modem for PLC communication, a CAN transceiver chip for CAN communication, an RS-485 transceiver chip for Modbus-based communication, Ethernet physical layer interfaces for 10/100 Mbps communication, USB interfaces and USB-to-Ethernet bridge chips for Gigabit Ethernet communication, Bluetooth interface circuitry, and JTAG interfaces for debugging and programming. The PLC Modem may denote a functional communication module configured to enable data transmission over power line networks, including protocol processing, data buffering, and control logic implemented by a microcontroller. The PLC Transceiver may denote a physical-layer circuit within the PLC modem configured to interface with the power line medium and to perform modulation, demodulation, and differential signal transmission and reception. The specific components identified in Table 1 are exemplary and may be substituted with devices in alternative embodiments.

**Table 1**

| **Protocol** | **Hardware Components** |
|---|---|
| PLC protocol | PLC transceiver chip |
| CAN protocol | CAN transceiver chip |
| RS-485 (Modbus) | RS-485 transceiver chip |
| Ethernet 10/100 Mbps | Ethernet PHY 10/100 Mbps |
| Bluetooth communication | UART to USB 1.0 bridge chip |
| USB 2.0 | USB interface |
| Ethernet 1 Gbps | USB 2.0 to Ethernet 1Gbps bridge chip |
| JTAG | JTAG |

In the illustrated embodiment, the control unit includes a microcontroller (not shown in FIG. 1) configured to simultaneously manage multiple communication protocols, perform protocol conversion using protocol mapping parameters, and enable bidirectional data transfer among the plurality of communication interfaces. The control unit is operatively coupled to the communication interfaces and is configured to receive data from a first communication interface operating according to a first communication protocol, identify the first communication protocol, convert the received data into a data format compatible with a second communication protocol, and transmit the converted data to a second communication interface operating according to the second communication protocol. In some embodiments, the control unit is further configured to dynamically allocate communication bandwidth based on real-time data traffic conditions, including buffer occupancy, latency, throughput, error rate, or interface priority.

In at least one embodiment, the apparatus (100) includes a PLC interface (102) configured to facilitate communication over a power line. The PLC interface (102) includes a PLC modem (103) configured to modulate and demodulate communication signals transmitted over the power line. The PLC interface (102) is electrically coupled to a buffer line driver (118) configured to condition, amplify, and impedance-match differential PLC signals prior to processing by the PLC modem (103). The PLC interface (102) is further coupled to a PLC signal input connector (116) configured to receive differential PLC signals, identified as PLC_P and PLC_N, from an external device.

In one embodiment, the PLC signal input connector (116) is electrically coupled to a power input connector (106), enabling the PLC interface (102) to serve as an entry point for both communication signals and electrical power. In such embodiments, differential PLC communication signals and line power are provided on common conductors, allowing coordinated signal reception and reference alignment for power integrity and communication reliability. Alternative embodiments may employ separate connectors for power and communication signals without departing from the scope of the present disclosure.

The apparatus (100) further includes a power regulation unit configured to supply regulated power to the control unit and the plurality of communication interfaces. In the illustrated embodiment, the power regulation unit includes the power input connector (106), which receives Power+ and Power- signals from one or more external power sources, including a first battery power source coupled via terminal block TB1 (104) and a second battery or line-coupled power source coupled via terminal block TB2 (116). In at least one embodiment, power from the plurality of power sources is combined using a diode-based power combining configuration, enabling redundancy and automatic switchover during power interruptions or fluctuations.

In at least one embodiment, the received power is passed through an input filter (108) configured to suppress electrical noise and electromagnetic interference. The filtered power is supplied to an isolated flyback transformer (110) configured to generate one or more isolated DC voltages, thereby providing galvanic isolation between the input power sources and internal circuitry. The isolated outputs of the flyback transformer (110) are further regulated by low-dropout voltage regulators, including LDO-1 (112) and LDO-2 (114), to generate stable supply voltages for different power domains within the apparatus.

In one embodiment, LDO-1 (112) generates a regulated PLC_3V3 supply referenced to ground, which serves as the primary power rail for the PLC modem (103) and associated analog and digital PLC circuitry. In another embodiment, LDO-2 (114) generates a regulated CPU_3V3 supply, which powers the control unit and other digital control circuitry. The separation of PLC_3V3 and CPU_3V3 power domains improves noise immunity and operational reliability.

In at least one embodiment, the PLC modem (103) is further coupled to a reset circuit (120) configured to ensure proper initialization, a JTAG interface (122) configured to support programming and debugging operations, and a crystal oscillator (124) configured to provide accurate clock signals for synchronized PLC communication. In alternative embodiments, the apparatus may include additional timing sources, storage units for storing protocol mapping parameters, or interface controllers without departing from the scope of the disclosure.

External devices may connect to the apparatus (100) using terminal blocks TB1 and TB2, the PLC signal input connector (116), or other interface-specific connectors corresponding to the plurality of communication interfaces. The integrated PLC modem subsystem, together with the power regulation architecture illustrated in FIG. 1, enables the apparatus to reliably receive, process, convert, and transmit communication signals across heterogeneous protocols in industrial, datacenter, and Internet of Things (loT) environments.

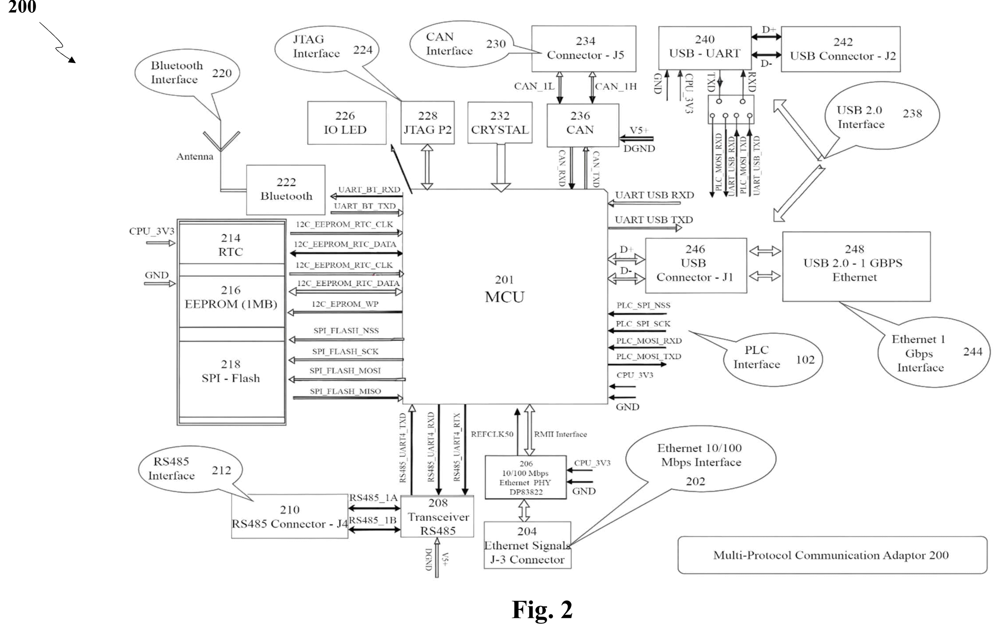

**FIG.** 2 illustrates a multi-protocol signal diagram of a multi-protocol communication apparatus (200), in accordance with an embodiment of the present disclosure. As illustrated, the signal diagram depicts how a plurality of protocol-specific communication interfaces, including PLC, CAN, RS-485, USB 2.0, Ethernet 10/100 Mbps, Ethernet 1 Gbps, and Bluetooth, are functionally integrated within a centralized architecture managed by a control unit. This architecture provides a scalable and adaptable communication framework suitable for datacenter environments, industrial automation systems, and multi-device networks.

In at least one embodiment, as already described in conjunction with FIG. 1, the control unit includes a microcontroller (201) that operates as a centralized processing and coordination unit. The microcontroller (201) is operatively coupled to the plurality of communication interfaces and is configured to perform protocol conversion between at least two of the distinct communication protocols and enable bidirectional data transfer among the interfaces. The microcontroller (201) manages real-time protocol conversion, data routing, memory access, and dynamic bandwidth allocation, thereby enabling seamless communication among heterogeneous protocols using a single apparatus.

In at least one embodiment, the PLC interface (102) is configured to receive and transmit communication signals over power lines that carry both electrical power and data. High-frequency filtering circuitry separates low-frequency power components from high-frequency PLC communication signals received as differential signal pairs PLC_P and PLC_N from a power and signal entry connector. The PLC signals are routed through a buffer line driver (118) configured to provide signal amplification, impedance matching, and line conditioning prior to processing by a PLC modem (103). The PLC modem (103) may include devices such as, but not limited to, R9A06G061GNPAAO, CPX4, ST8500, or PL360B, and interfaces with the microcontroller (201) via serial communication protocols such as SPI or UART. Differential transmit and receive signal pairs TXP/TXN and RXP/RXN enable reliable bidirectional PLC communication.

In at least one embodiment, the apparatus includes an Ethernet 10/100 Mbps interface (202) including an Ethernet physical layer (PHY) device (206) coupled to an Ethernet connector (204). The Ethernet PHY supports data communication using a Reduced Media Independent Interface (RMII) between the PHY and the microcontroller (201). In an alternative embodiment, higher-speed networking is supported through an Ethernet 1 Gbps interface (244) implemented using a USB 2.0 to Ethernet bridge (248), such as a LAN7500, AX88179, or RTL8153 device, with external connectivity provided through a USB connector (246). These Ethernet interfaces enable the apparatus to function as a network gateway or bridge between Ethernet-based systems and other communication protocols.

In at least one embodiment, the apparatus further includes an RS-485 interface (212) including an RS-485 transceiver (208) coupled to an RS-485 connector (210). The RS-485 interface is configured to support Modbus or other industrial serial communication protocols and manages differential RS485_1A and RS485_1B signals. The RS-485 interface enables bidirectional data exchange with industrial equipment, legacy systems, or field devices operating according to serial communication standards.

In at least one embodiment, the apparatus includes a CAN interface (230) including a CAN transceiver (236) coupled to an associated connector (234). The CAN interface supports differential signaling using CAN_TXD and CAN_RXD lines and may provide galvanic isolation between the CAN bus and the microcontroller (201). This interface is particularly suitable for automotive systems, industrial automation networks, and datacenter control applications requiring robust and noise-resistant communication.

In at least one embodiment, the apparatus incorporates a USB 2.0 interface (238) implemented using a USB-to-UART bridge device (240), such as CP2102N-A02, coupled to a USB connector (242). The USB interface supports data communication over D+ and D- signal lines at speeds up to 480 Mbps, enabling data exchange with external devices and modules. In one embodiment, the USB 2.0 interface is utilized to support the Ethernet 1 Gbps bridge (248) via a separate USB connector (246), while in other embodiments, it may interface with external peripherals or configuration devices.

In at least one embodiment, the apparatus supports Bluetooth communication via a Bluetooth interface (220) including a Bluetooth module (222), such as OA14531MOO, operatively coupled to the microcontroller (201) through UART or SPI interfaces. The Bluetooth interface enables wireless communication with external devices, providing a flexible wireless alternative to wired communication protocols and supporting integration with Internet of Things (loT) devices.

In at least one embodiment, the apparatus further includes system-level components including a real-time clock (RTC) unit (214) configured to generate time-stamped logs of communication events, a non-volatile storage unit including EEPROM (216) and SPI flash memory (218) for storing protocol mapping parameters, firmware images, and buffered data, and one or more JTAG interfaces (224, 228) for firmware programming, debugging, and maintenance. An I/O LED (226) may be provided to visually indicate operational status or communication activity. Clock synchronization across the communication interfaces is maintained using a crystal oscillator (232) coupled to the microcontroller (201).

In at least one embodiment, the microcontroller (201) is configured to receive data from a first communication interface, identify the associated communication protocol, convert the received data into a data format compatible with a second communication protocol, and transmit the converted data through a second communication interface. The microcontroller accesses protocol mapping parameters stored in the storage unit to perform protocol conversion and may dynamically update the parameters based on operational conditions. The microcontroller further dynamically allocates communication bandwidth among the plurality of communication interfaces based on real-time traffic conditions, thereby optimizing data flow and minimizing latency.

The hardware components listed in Table 2 below represent exemplary implementations of the control unit, memory devices, communication interfaces, and peripheral components illustrated in FIG. 2. These components are provided for illustrative purposes only, and components from other manufacturers or with different specifications may be employed in alternative embodiments without departing from the scope of the present disclosure.

**Table - 2**

| **Adaptor Component** | **Primary Component** |
|---|---|
| Microcontroller | RSFS651EHOFP#30 |
| Flash Memory | MX2SL6433FM21-08Q |
| EEPROM Memory | M24M01-0WMN3TP/K |
| RTC | RX8010SJ |
| PLC Transceiver | R9A06G061GNPAAO |
| PLC Line Driver (Optional) | ISL151021RZ |
| CAN Transceiver | 15010SOOWR |
| UART to use 2.0 Bridge | CP2102N-A02 |
| RS48S Converter | ISL8483EleZ-T |
| Ethernet 10/100 Mbps | OP83822 |
| USB 2.0 to 1Gbps Ethernet (External module) | LAN7500 |
| Bluetooth Module | OA14531MOO |
| Mechanical Module | Customize parts |
| Connector use 2.0 | |
| Connector CAN | |
| Connector RS-485 | |
| Connector for Ethernet 10 /100 | |
| Connector for PLC | |
| Ethernet 1Gbps module | LAN7500 / AX88179BQF /AX88179X /RTL81S3e-VB-CG |

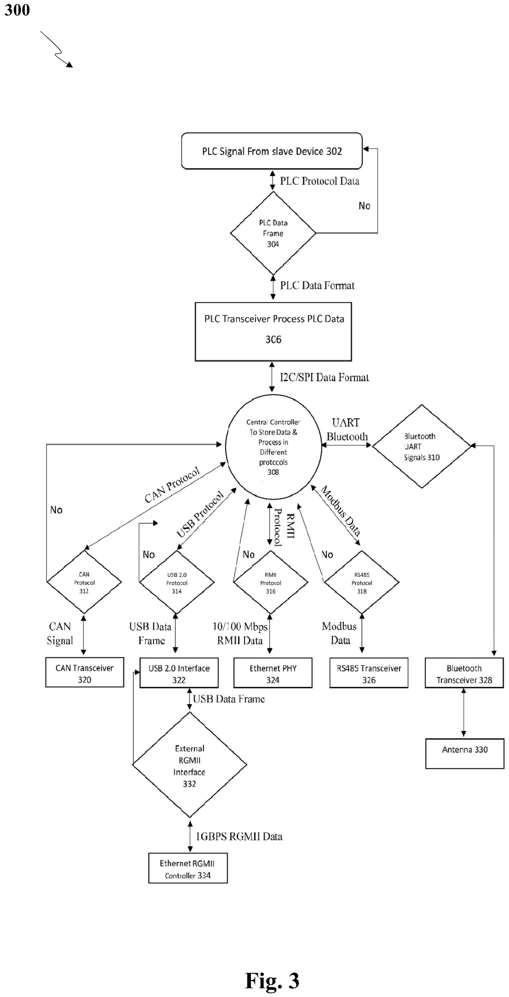

**FIG. 3** illustrates a signal process flowchart (300) depicting the signal processing logic and protocol handling workflow executed by a multi-protocol communication apparatus (100, 200), in accordance with an embodiment of the present disclosure. The flowchart represents functional operations performed by a control unit operatively coupled to a plurality of communication interfaces, wherein the control unit is configured to perform protocol conversion between at least two of the distinct communication protocols and enable bidirectional data transfer among the plurality of communication interfaces, thereby enabling communication among heterogeneous communication protocols using a single apparatus.

In at least one embodiment, the signal process flowchart (300) illustrates how the control unit operates as a centralized processing entity that manages bidirectional data flow, protocol identification, protocol conversion, memory interaction, and transceiver coordination across a plurality of communication interfaces. The plurality of communication interfaces may include, but are not limited to, a PLC interface, a CAN interface, a USB interface, an RS-485 interface, a Bluetooth interface, an Ethernet interface operating under RMII, and an Ethernet interface operating under a USB-based Gigabit Ethernet architecture.

This architecture enables scalable and flexible communication suitable for industrial, embedded, datacenter, and multi-device network applications. Particularly, the plurality of communication interfaces include the following:
- A PLC interface (102) including a PLC modem (103) and a buffer line driver (118), enabling robust bidirectional communication over low-voltage AC or DC power lines while sharing conductors for power and data.
- A CAN interface (230) including a CAN transceiver (236) configured to support ISO-compliant CAN communication, commonly used in industrial automation and automotive systems.
- An RS-485 interface (212) including an RS-485 transceiver (208) for Modbus RTU or similar serial communication protocols.
- An Ethernet interface, including both a 10/100 Mbps Ethernet PHY (206) operating under RMII and a USB-to-1 Gbps Ethernet bridge (248), facilitating wired network connectivity with high data throughput.
- A USB interface (238) including a USB-to-UART bridge (240), supporting USB 2.0 standards.
- A Bluetooth interface (220) incorporating a Bluetooth transceiver (222) for secure short-range wireless communication.
- A JTAG interface (224, 228) used for debugging, boundary scan testing, and firmware updates.

In at least one embodiment, at block (302), signal processing begins when a signal formatted according to a first communication protocol is received by a first communication interface. In the illustrated embodiment, the first communication interface is a power-line communication interface configured to receive PLC signals from a slave device over a conductor that simultaneously supplies electrical power and communication signals. The apparatus continuously monitors the PLC interface for incoming communication signals.

At block (304), the received PLC signal is examined to determine whether the signal conforms to a valid PLC data frame. This validation may include analyzing signal framing, header structure, timing characteristics, checksum fields, or other protocol-specific indicators. If the received signal does not satisfy the validation criteria, the process returns to block (302) to await receipt of a subsequent signal.

Upon successful validation of the PLC data frame, the process proceeds to block (306), wherein the validated signal is processed by the PLC modem (103). In at least one embodiment, the PLC modem demodulates the received differential PLC signals and extracts payload data. Where a buffer line driver (118) is employed, differential signal pairs corresponding to transmit (TXP/TXN) and receive (RXP/RXN) paths are used between the buffer line driver and the PLC modem to maintain signal integrity during bidirectional communication over the power line. The extracted data is then forwarded to the control unit for further processing.

At block (308), the control unit receives the extracted data from the PLC modem and determines how the data is to be processed, routed, or converted. In at least one embodiment, the control unit identifies the communication protocol associated with the received data and determines whether protocol conversion is required. The control unit may temporarily store the data in a storage unit, including volatile or non-volatile memory, to accommodate differences in data rates, buffering requirements, or routing decisions.

In at least one embodiment, at block (310), the control unit determines whether the data is to be transmitted via a Bluetooth interface. If the protocol condition is satisfied, the control unit formats the data into a Bluetooth-compatible format and transmits the data to a Bluetooth transceiver (328, 222) for wireless communication via an associated antenna (330). If the Bluetooth condition is not met, control returns to block (308).

In at least one embodiment, at block (312), the control unit determines whether the target protocol corresponds to a Controller Area Network protocol. If so, the control unit converts the received data into CAN-compatible frames using protocol mapping parameters and forwards the converted data to a CAN transceiver (320). If the CAN protocol condition is not met, the process returns to block (308).

In at least one embodiment, at block (314), the control unit evaluates whether the data is to be transmitted using a Universal Serial Bus protocol. If the condition is satisfied, the control unit generates USB-compatible data frames and routes the data to a USB 2.0 interface (322). If the USB condition is not satisfied, control returns to block (308).

In at least one embodiment, at block (332), the control unit determines whether the USB interface is coupled to an external USB-to-Ethernet bridge supporting Gigabit Ethernet communication. If such an interface is present, the USB data is routed to the USB-to-Gigabit Ethernet bridge (334), enabling high-speed Ethernet transmission. Otherwise, the data remains routed through the USB interface.

In at least one embodiment, at block (316), the control unit determines whether the data is to be transmitted using an Ethernet protocol operating under RMII. If so, the control unit forwards the data to a 10/100 Mbps Ethernet physical layer interface (324). If the RMII condition is not satisfied, control returns to block (308).

In at least one embodiment, at block (318), the control unit determines whether the data is intended for transmission via an RS-485 interface. If identified as RS-485-compatible data, the control unit formats the data accordingly and forwards it to an RS-485 transceiver (326). If the RS-485 condition is not met, control returns to block (308).

In at least one embodiment, the signal process flowchart (300) supports bidirectional communication between any two communication interfaces managed by the apparatus. Any interface may operate as an input interface or an output interface based on operational conditions, and the control unit dynamically performs protocol conversion and routing accordingly.

In at least one embodiment, the control unit analyzes each received communication frame, retrieves applicable protocol mapping parameters from storage, converts the data into a compatible data format for a selected destination interface, and initiates transmission through the corresponding transceiver.

In at least one embodiment, the control unit dynamically allocates communication bandwidth among the plurality of communication interfaces based on real-time data traffic conditions, including buffer occupancy, latency, throughput, error rate, or interface priority.

In at least one embodiment, JTAG interfaces may be employed during initialization, debugging, firmware updates, or fault recovery to support in-system programming and diagnostic operations.

Accordingly, FIG. 3 illustrates a signal flow for multi-protocol communication wherein the apparatus receives a signal formatted according to a first communication protocol, identifies the protocol, converts the received signal into a format compatible with a second communication protocol, and transmits the converted signal through a second communication interface, thereby enabling real-time bidirectional communication using a single apparatus.

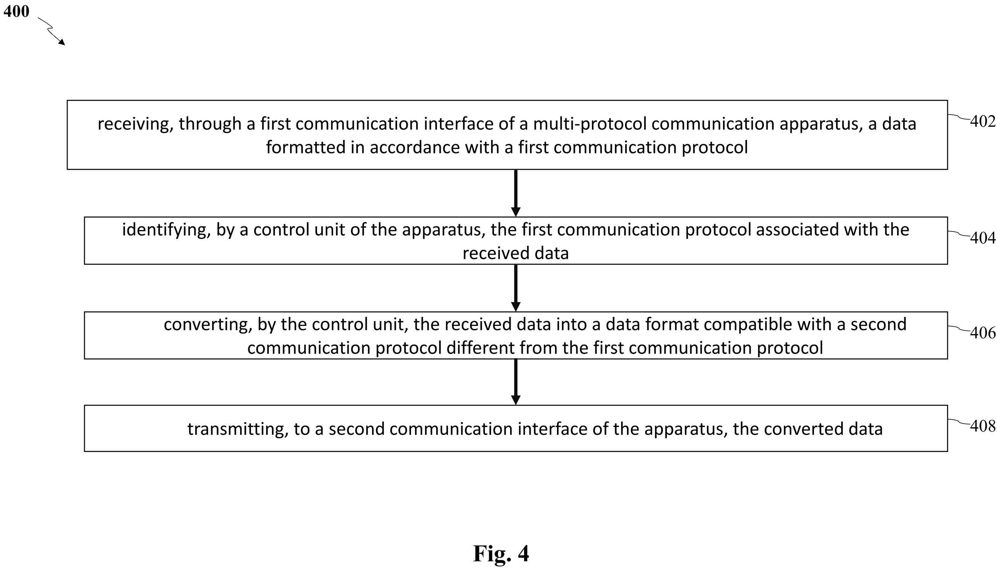

**FIG. 4** illustrates a flowchart (400) of a method for multi-protocol communication performed by a multi-protocol communication apparatus (100, 200), in accordance with an embodiment of the present disclosure. The method represents firmware-executed operational logic carried out by a control unit operatively coupled to a plurality of communication interfaces, wherein the method enables bidirectional communication between devices operating on different communication protocols using a single apparatus.

In at least one embodiment, the method (400) is executed by a control unit including a microcontroller configured to simultaneously manage multiple communication protocols. The control unit cooperates with the plurality of communication interfaces to receive, identify, convert, and transmit communication data in real time. The method may be implemented as firmware instructions stored in non-transitory memory and executed during runtime.

At step (402), the method includes receiving, through a first communication interface of the multi-protocol communication apparatus, a data formatted according to a first communication protocol. The first communication interface may be any one of a PLC interface, a CAN interface, an RS-485 interface, an Ethernet interface, a USB interface, or a Bluetooth interface. In at least one embodiment, the received data is a power-line communication signal received via a PLC interface over a conductor that simultaneously supplies electrical power and communication signals to the apparatus.

In at least one embodiment, the receiving step (402) further includes monitoring one or more communication interfaces for incoming data and detecting the presence of a valid communication frame. The received data may be temporarily buffered to accommodate differences in data rates among the plurality of communication interfaces.

At step (404), the method includes identifying, by the control unit, the first communication protocol of the received data. Protocol identification may be performed by analyzing at least one of data framing characteristics, header structure, interface-level indicators, protocol-specific timing behavior, or transceiver-level metadata. This identification enables the control unit to determine whether protocol conversion is required.

In at least one embodiment, the identifying step (404) includes validating the received data for authenticity and integrity prior to further processing. If the data does not conform to the expected data format of the identified protocol, the control unit may discard the data or request retransmission.

At step (406), the method includes converting, by the control unit, the received data into a data format compatible with a second communication protocol different from the first communication protocol. In embodiments where the first communication protocol is a power-line communication protocol, the received PLC signal is first demodulated by a PLC modem prior to protocol conversion by the control unit. The control unit performs protocol conversion using predefined or dynamically updated protocol mapping parameters stored in a storage unit operatively coupled to the control unit.

In at least one embodiment, the converting step (406) includes temporarily storing the received data in storage prior to conversion to accommodate communication interfaces operating at different data rates. The protocol mapping parameters may include frame translation rules, header remapping tables, payload restructuring logic, and quality-of-service parameters.

In at least one embodiment, the control unit dynamically updates the protocol mapping parameters based on operational conditions, including interface availability, traffic load, or detected errors. This enables adaptive protocol translation without manual reconfiguration.

At step (408), the method includes transmitting, to a second communication interface of the apparatus, the converted data. The second communication interface may be the same type as, or different from, the first communication interface and may include any interface selected from the group consisting of PLC, CAN, RS-485, Ethernet, USB, and Bluetooth interfaces.

In at least one embodiment, the transmitting step (408) includes formatting the converted data into a protocol-compliant frame and forwarding the data frame to a corresponding transceiver or communication module for transmission to an external device.

In at least one embodiment, the receiving step (402) and transmitting step (408) are performed bidirectionally between any two communication interfaces of the apparatus. Any communication interface may operate as an input interface or an output interface based on operational conditions.

In at least one embodiment, the method further includes dynamically allocating communication bandwidth among multiple communication interfaces based on real-time data traffic conditions, including buffer occupancy, latency, throughput, error rate, or interface priority.

In at least one embodiment, the method further includes generating a time-stamp associated with at least one of the received data or the transmitted data using a real-time clock, wherein the time-stamp is stored for logging, diagnostics, or event correlation.

In at least one embodiment, the method is executed while the apparatus is powered by a power regulation unit configured to receive power from a power-line communication input, a battery power source, or a combination thereof. Power from multiple sources may be combined using a diode-based configuration to support uninterrupted operation during power fluctuations. Accordingly, the described method enables seamless, real-time, bidirectional communication among heterogeneous communication protocols using a single multi-protocol communication apparatus.

The disclosed multi-protocol communication apparatus and corresponding method provide several technical effects and advantages over conventional communication adaptors and interface solutions.

In one technical effect, the apparatus enables multi-protocol integration by supporting a plurality of distinct communication protocols, including, but not limited to, PLC, CAN, RS-485, Ethernet (10/100 Mbps and 1 Gbps), USB 2.0, and Bluetooth, within a single integrated adaptor device. By consolidating multiple protocol-specific interfaces into a unified hardware platform under control of a central controller, the apparatus eliminates the need for separate, dedicated communication boards or adaptors, thereby reducing system complexity, physical footprint, and overall deployment cost.

Another technical effect is the provision of bidirectional communication among heterogeneous communication interfaces. The apparatus enables bidirectional data transfer between devices operating under different communication protocols, allowing data to be received via a first interface, converted, and transmitted via a second interface, and vice versa. This capability facilitates seamless interoperability in complex networked environments, such as datacenters and industrial systems, where multiple protocols must coexist and exchange information reliably.

A further technical effect is the ability to perform real-time protocol conversion. The control unit is configured to convert data between at least two of the distinct communication protocols using predefined or dynamically updated protocol mapping parameters. In embodiments involving power-line communication, modulation and demodulation are performed by a dedicated PLC modem prior to protocol-level processing by the control unit. This real-time conversion capability overcomes protocol incompatibility barriers between heterogeneous devices and supports efficient data exchange in environments such as datacenter panels, industrial automation systems, power distribution networks, and communication infrastructure.

The apparatus also provides the technical advantage of ease of deployment. The multi-protocol communication apparatus is designed to be plug-and-play and does not require hardware modifications to existing system architectures. As a result, the apparatus can be readily deployed in legacy systems, including datacenters and industrial control installations, without replacing existing devices or rewiring communication networks.

Another technical effect is protocol agnosticism. By decoupling system operation from any single communication protocol, the apparatus provides enhanced flexibility and scalability. This protocol-independent architecture allows the system to accommodate evolving communication standards and newly introduced protocols, thereby extending the system's longevity and reducing the need for frequent hardware upgrades.

The disclosed apparatus further achieves enhanced reliability and operational uptime. The integrated power regulation unit, which receives power from one or more external sources via a shared power entry interface and provides isolated and regulated voltage rails, ensures stable power delivery to the control unit and communication interfaces. This configuration enables uninterrupted communication during power disturbances, fluctuations, or outages, which is critical for mission-critical and industrial applications.

Additionally, the apparatus offers versatile applicability across a wide range of deployment scenarios. The multi-protocol communication capabilities make the apparatus suitable for use in datacenters, automation panels, smart grid communication systems, building management systems, and Internet of Things (IoT) networks, providing a robust and adaptable communication backbone across diverse platforms.

Finally, the inclusion of maintenance and debugging support provides a further technical advantage. The presence of one or more JTAG interfaces enables in-system debugging, firmware upgrades, and diagnostics, thereby improving maintainability, simplifying system updates, and reducing operational downtime.

Collectively, these technical effects demonstrate that the disclosed multi-protocol communication apparatus and method provide a unified, reliable, scalable, and future-ready solution for enabling seamless communication among heterogeneous communication protocols using a single device.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and techniques have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

It should be noted that the description and figures merely illustrate the principles of the present subject matter. It should be appreciated by those skilled in the art that conception and specific embodiment disclosed may be readily utilized as a basis for modifying or designing other structures for carrying out the same purposes as the present subject matter. It should also be appreciated by those skilled in the art by devising various systems that, although not explicitly described or shown herein, embody the principles of the present subject matter and are included within its scope.

Furthermore, all examples recited herein are principally intended expressly to be for pedagogical purposes to aid the reader in understanding the principles of the present subject matter and the concepts contributed by the inventor(s) to further the art and are to be construed as being without limitation to such specifically recited examples and conditions. The novel features, which are believed to be characteristic of the present subject matter, both as to its organization and method of operation, together with further objects and advantages, will be better understood from the following description when considered in connection with the accompanying figures.

Although embodiments for the present subject matter have been described in language specific to package features, it is to be understood that the present subject matter is not necessarily limited to the specific features described. Rather, the specific features and methods are disclosed as embodiments for the present subject matter. Numerous modifications and adaptations of the system/device of the present disclosure will be apparent to those skilled in the art, and thus it is intended by the appended claims to cover all such modifications and adaptations which fall within the scope of the present subject matter.

## Claims

1. A multi-protocol communication apparatus (100, 200), comprising:
a plurality of communication interfaces (102, 230, 212, 244, 238, 220, 224, 228), each communication interface configured to communicate using a respective and distinct communication protocol; and
a control unit operatively coupled to the plurality of communication interfaces (102, 230, 212, 244, 238, 220, 224, 228), and configured to:
perform protocol conversion between at least two of the distinct communication protocols; and
enable bidirectional data transfer among the plurality of communication interfaces (102, 230, 212, 244, 238, 220, 224, 228),
whereby the apparatus enables communication among heterogeneous communication protocols using a single apparatus.

2. The apparatus (100, 200) as claimed in claim 1, wherein the control unit is configured to:
(a) receive data from a first communication interface operating in accordance with a first communication protocol;
(b) identify the first communication protocol associated with the received data;
(c) convert the received data into a data format compatible with a second communication protocol different from the first communication protocol; and
(d) transmit the converted data to a second communication interface operating in accordance with the second communication protocol.

3. The apparatus (100, 200) as claimed in claim 1 or 2, wherein the plurality of communication interfaces (102, 230, 212, 244, 238, 220, 224, 228) comprises at least two interfaces selected from the group consisting of a power-line communication (PLC) interface (102), a Controller Area Network (CAN) interface (230), an RS-485 interface (212), an Ethernet interface (244), a Universal Serial Bus (USB) interface (238), a Bluetooth interface (220), and a Joint Test Action Group (JTAG) interface (224, 228).

4. The apparatus (100, 200) as claimed in any preceding claim, wherein the control unit performs protocol conversion using protocol mapping parameters, and wherein the apparatus further comprises a storage unit operatively coupled to the control unit, the storage unit being configured to store at least one of:
a. predefined protocol mapping parameters,
b. dynamically updated protocol mapping parameters, and
c. temporarily buffered data to accommodate communication interfaces operating at different data rates.

5. The apparatus (100, 200) as claimed in any preceding claim, wherein the control unit is configured to dynamically allocate communication bandwidth among the plurality of communication interfaces (102, 230, 212, 244, 238, 220, 224, 228) based on real-time data traffic conditions, the real-time data traffic conditions comprising at least one of buffer occupancy, latency, throughput, error rate, or interface priority.

6. The apparatus (100, 200) as claimed in any preceding claim, comprising a power regulation unit configured to supply regulated power to the control unit and the plurality of communication interfaces (102, 230, 212, 244, 238, 220, 224, 228),
wherein the power regulation unit:
(a) comprises an input filter (108) configured to suppress electrical noise, an isolated flyback transformer (110) configured to generate one or more isolated DC voltages, and at least one low-dropout voltage regulator configured to provide regulated supply voltages;
(b) is configured to receive power from both a battery power source (104) and a power-line communication (PLC) input connector (116); and
(c) combines power from the battery power source (104) and the PLC input connector (116) using a diode-OR configuration.

7. The apparatus (100, 200) as claimed in any preceding claim, wherein a power-line communication (PLC) interface (102) of the plurality of communication interfaces (102, 230, 212, 244, 238, 220, 224, 228) is configured to receive communication signals and electrical power through a shared connector providing differential PLC signals and line power on common conductors,
and wherein the PLC interface (102) comprises a PLC modem (103) configured to modulate and demodulate communication signals transmitted over a power line, and a buffer line driver (118) configured to condition differential PLC signals prior to processing by the PLC modem.

8. The apparatus (100, 200) as claimed in any preceding claim, wherein:
(a) an Ethernet interface (244) comprises at least one of a 10/100 Mbps Ethernet physical layer interface or a USB-to-Ethernet bridge (248) configured to support Gigabit Ethernet communication;
(b) an RS-485 interface (212) is configured to support Modbus or other industrial serial communication protocols; and
(c) a Controller Area Network (CAN) interface (230) comprises an isolated CAN transceiver (236) configured for differential signaling.

9. The apparatus (100, 200) as claimed in any preceding claim, further comprising a real-time clock (RTC) unit (214) configured to generate time-stamped logs of communication events, wherein the control unit comprises a microcontroller (201) configured to simultaneously manage multiple communication protocols,
wherein a Bluetooth interface (220) is configured to provide encrypted wireless communication with an external device, and
wherein any of the plurality of communication interfaces (102, 230, 212, 244, 238, 220, 224, 228) is selectively configurable as a first communication interface or a second communication interface based on operational conditions.

10. A method (400) for multi-protocol communication, comprising:
receiving (402), through a first communication interface of a multi-protocol communication apparatus (100, 200), a data formatted in accordance with a first communication protocol;
identifying (404), by a control unit of the apparatus, the first communication protocol associated with the received data;
converting (406), by the control unit, the received data into a data format compatible with a second communication protocol different from the first communication protocol; and transmitting (408), to a second communication interface of the apparatus, the converted data.
